# EUROPÄISCHE PATENTSCHRIFT

(11) **EP 2 447 733 B1**
(45) Veröffentlichungstag und Bekanntmachung des Hinweises auf die Patenterteilung: **13.03.2013**
(21) Anmeldenummer: 10189468.1
(22) Anmeldetag: 29.10.2010
(51) Int. Cl.: G01S 7/481, G01S 17/10, G01S 17/42

(54) **Optoelektronischer Sensor**
Optoelectronic sensor
Capteur optoélectronique

(43) Veröffentlichungstag der Anmeldung: 02.05.2012
(73) Patentinhaber: Sick AG, 79183 Waldkirch (DE)
(72) Erfinder: Krämer, Joachim, 79102 Freiburg (DE)
(74) Vertreter: Hehl, Ulrich

(56) Entgegenhaltungen:
- EP-A1- 1 548 459
- DE-A1- 4 340 756
- GB-A- 2 444 138
- US-A- 5 648 852

## Beschreibung

Die Erfindung betrifft einen optoelektronischen Sensor, insbesondere einen Laserscanner, sowie ein Verfahren zur Erkennung von Objekten in einer Überwachungsebene nach dem Oberbegriff von Anspruch 1 beziehungsweise Anspruch 15.

Laserscanner werden in vielen Anwendungen zur Objekterfassung eingesetzt. Ein von einem Laser erzeugter Lichtstrahl überstreicht mit Hilfe einer Ablenkeinheit periodisch eine Überwachungsebene. Dazu dient meist ein rotierender Spiegel als Ablenkeinheit, die innerhalb einer festen Ebene einen Sichtbereich von bis zu 360° in diskreten Winkelschritten abtastet. Das Sendelicht wird an Objekten in der Überwachungsebene 22 remittiert und in dem Scanner ausgewertet. Aus der Winkelstellung der Ablenkeinheit wird auf die Winkellage des Objektes und aus der Lichtlaufzeit unter Verwendung der Lichtgeschwindigkeit zusätzlich auf die Entfernung des Objektes von dem Laserscanner geschlossen. Wenn der Überwachungsbereich eine Abtastebene ist, sind mit diesen Polarkoordinaten sämtliche möglichen Objektpositionen zweidimensional erfasst. Dabei sind zwei grundsätzliche Prinzipien bekannt, die Lichtlaufzeit zu bestimmen. Bei phasenbasierten Verfahren wird das Sendelicht moduliert und die Phasenverschiebung des empfangenen gegenüber dem gesendeten Licht ausgewertet. Bei pulsbasierten Verfahren misst der Laserscanner die Laufzeit, bis ein ausgesandter Lichtpuls wieder empfangen wird.

In der Sicherheitstechnik werden Laserscanner zur Überwachung einer Gefahrenquelle eingesetzt, wie sie beispielsweise eine gefährliche Maschine darstellt. Ein derartiger Sicherheitslaserscanner ist aus der DE 43 40 756 A1 bekannt. Dabei wird ein Schutzfeld überwacht, das während des Betriebs der Maschine von Bedienpersonal nicht betreten werden darf. Erkennt der Laserscanner einen unzulässigen Schutzfeldeingriff, etwa ein Bein einer Bedienperson, so löst er einen Nothalt der Maschine aus. Andere Eingriffe in das Schutzfeld, beispielsweise durch statische Maschinenteile, können vorab als zulässig eingelernt werden. Oft sind den Schutzfeldern Warnfelder vorgelagert, wo Eingriffe zunächst nur zu einer Warnung führen, um den Schutzfeldeingriff und damit die Absicherung noch rechtzeitig zu verhindern und so die Verfügbarkeit der Anlage zu erhöhen.

Sensoren, die in der Sicherheitstechnik eingesetzt werden, müssen besonders zuverlässig arbeiten und deshalb hohe Sicherheitsanforderungen erfüllen, beispielsweise die Norm EN13849 für Maschinensicherheit und die Gerätenorm EN61496 für berührungslos wirkende Schutzeinrichtungen (BWS). Zur Erfüllung dieser Sicherheitsnormen sind eine Reihe von Maßnahmen zu treffen, wie beispielsweise sichere elektronische Auswertung durch redundante, diversitäre Elektronik, Funktionsüberwachung oder speziell Überwachung der Verschmutzung optischer Bauteile und/oder Vorsehen von einzelnen Testzielen mit definierten Reflexionsgraden, die unter den entsprechenden Scanwinkeln erkannt werden müssen.

Zum Schutz vor Umgebungseinflüssen sind Laserscanner üblicherweise mit einer Frontscheibe ausgestattet, welche einen Teil des Gehäuses darstellt und die Abtaststrahlen passieren lässt. Für einen funktionell einwandfreien und sicheren Betrieb wird fortwährend mittels eine Verschmutzungsmessung geprüft, ob die Frontscheibe Kratzer, Staub, Beschlag oder sonstige Beeinträchtigungen aufweist. Da die Frontscheibe zwei optische Grenzflächen bildet, entsteht eine Reflexion des Sendestrahls, die sich störend auf die Messung auswirken kann.

Der herkömmliche Optikaufbau eines Laserscanners sieht eine koaxiale Anordnung von Sende- und Empfangsstrahlengang vor. Um zu vermeiden, dass der Frontscheibenreflex den Empfänger trifft, ist die Frontscheibe schräg gestellt. Dadurch wird der Frontscheibenreflex nach oben weggespiegelt und verläuft sich in einer optischen Falle. Die Vorstellung einer schräg gestellten Scheibe bezieht sich auf eine Schnittdarstellung in einer festen Winkelstellung der Ablenkeinheit. Um in jeder Stellung der Drehbewegung eine schräge Fläche zu präsentieren, ist die Frontscheibe als entsprechender Rotationskörper ausgebildet, also als Kegelstumpf.

Die definierte Umlenkung des Frontscheibenreflexes in eine optische Falle mit einer derartigen Formgebung der Frontscheibe setzt voraus, dass der Sendestrahl stets auf gleicher Höhe auftrifft. Ist diese Bedingung aber nicht erfüllt, so wird entweder viel Bauraum für eine ausgedehnte optische Falle benötigt, oder es kann doch Streulicht aus dem Frontscheibenreflex in den Empfangspfad gelangen.

In der EP 1 548 450 A1 wird ein Laserscanner mit biaxialem Aufbau beschrieben. Die Frontscheibe des Laserscanners ist als Teil einer Kugelfläche ausgebildet. In einer Ausführungsform kann von der Teilkugelform abgewichen werden, indem die Frontscheibe beispielsweise eiförmig ausgebildet wird. Mit Hilfe von einer Blende wird der Frontscheibenreflex unterdrückt.

Aus der GB 2 444 138 A ist eine Scanvorrichtung bekannt, die ein Ein- und Austrittsfenster in Form einer Kugelkappe umfasst. Die US 5,648,862 beschreibt einen Laserstrahl-Distanzmesser, der in einer Ausführungsform eine kugelförmige Abdeckung einer Fensteröffnung besitzt.

Daher ist Aufgabe der Erfindung, die Unterdrückung des Frontscheibenreflexes zu verbessern.

Diese Aufgabe wird durch einen optoelektronischen Sensor gemäß Anspruch 1 und durch ein Verfahren zur Erkennung von Objekten in einer Überwachungsebene gemäß Anspruch 13 gelöst. Dabei geht die Erfindung von dem Grundgedanken aus, dass der Sendestrahl auf unterschiedlicher Höhe auf die Frontscheibe auftreffen kann. Dann genügt eine Frontscheibe in Form eines Kegelstumpfes nicht mehr zur definierten Ablenkung des Frontscheibenreflexes. Stattdessen wird die Frontscheibe als Freiformfläche ausgebildet. Um den Frontscheibenreflex bei einer festen Winkelstellung definiert abzulenken, wird in einem entsprechenden Schnitt durch die Frontscheibe, also senkrecht zu der Überwachungsebene und vorzugsweise durch eine Mittelachse der Ablenkeinheit, ein gekrümmter Verlauf der Frontscheibe gewählt. Dieser Verlauf ist vorzugsweise konvex.

Die Erfindung hat den Vorteil, dass der Frontscheibenreflex unabhängig von einer Auf- und Abbewegung des Sendestrahls gegenüber der Überwachungsebene sowie sogar bei nicht zu stark ausgeprägter seitlicher Verschiebung bezüglich einer Mittenachse definiert umgeleitet wird. Dadurch wird eine mechanisch einfache und kostengünstige Ausblendung des Frontscheibenreflexes ermöglicht. Der Sende- und Empfangsstrahlengang wird dabei nicht oder nur minimal beeinflusst.

Die Überwachungsebene wird auch als Abtastebene oder Scanebene bezeichnet. Wenn die Ablenkeinheit rotiert, steht die Überwachungsebene senkrecht zur Drehachse. Es ist auch möglich, den Sensor zyklisch gegenüber der Drehachse zu verkippen. Dann wird anstelle einer Ebene ein dreidimensionaler Raumbereich überwacht, der geometrisch das Komplement eines Doppelkegels ist. Auch ein solcher Raumbereich wird im Rahmen dieser Beschreibung vereinfachend als Überwachungsebene bezeichnet, und eine senkrechte Orientierung zu diesem Raumbereich bezieht sich auf die Mittenebene.

Der remittierte Lichtstrahl wird meist über dieselbe Ablenkeinheit geführt wie der ausgesandte Lichtstrahl. Häufig dient dann ein bestimmter Bereich der Ablenkeinheit der Umlenkung des Sendestrahls und die übrige Ablenkeinheit der Umlenkung des remittierten Lichts zu dem Lichtempfänger. Prinzipiell ist aber auch möglich, jeweils eine eigene Ablenkungseinheit zu verwenden.

In der Regel ist relevante Information über Objekte in der Überwachungsebene eine Objektfeststellung mit einer Positionsangabe. Es können aber auch andere Größen wie eine Objektkontur, eine Objektgröße oder Remissionseigenschaften erfasst werden.

Die Frontscheibe bildet bevorzugt einen Rotationskörper bezüglich einer zentralen Achse senkrecht zu der Überwachungsebene, wobei die zentrale Achse insbesondere eine Drehachse der Ablenkeinheit ist. Ein solcher Rotationskörper ist aber nicht notwendig auch rotationssymmetrisch, da anstelle eines 360°-Sichtbereichs auch kleinere Sichtbereiche von beispielsweise 270°, 180° oder andere Winkelbereiche möglich sind. Dabei gibt es dann Winkelbereiche, in denen der Sensor Totzonen aufweist, die für eine Montage an einer Wand, interne Leitungsführung oder Elektronik oder ein Testziel zur Überprüfung des Lichtsenders verwendet werden kann. In der Ausführung als Rotationskörper ist naturgemäß die Frontscheibe nicht nur in einem Schnitt senkrecht zu der Überwachungsebene mit einer Krümmung versehen, sondern in allen Schnitten senkrecht zu der Überwachungsebene durch die zentrale Achse in Winkeln innerhalb des Sichtbereichs mit der jeweils gleichen Krümmung.

Die Richtung senkrecht zu der Überwachungsebene kann zur sprachlichen Vereinfachung als Höhenrichtung bezeichnet werden. Die Krümmung der Frontscheibe nimmt vorzugsweise mit der Höhe monoton zu oder monoton ab. Dadurch ist auch eine durchgehende Krümmung in Höhenrichtung vorgesehen. Andererseits sind auch plane Zwischenbereiche oder Facetten denkbar, die gleichsam eine diskrete Näherung einer durchgehenden Krümmung mit Polygonflächen entspricht. Noch bevorzugter ist der Krümmungsverlauf streng monoton, so dass also sphärische Teilbereiche vermieden sind. Eine besonders geeignete derartige Krümmung führt zu einer kelchförmig gekrümmten Frontscheibe.

Vorteilhafterweise steht jede Sekante, die durch einen Schnitt der Frontscheibe senkrecht zu der Überwachungsebene verläuft, schräg zu der Überwachungsebene. Das gilt damit insbesondere auch für diejenige Sekante, die durch die obere und untere Kante der Frontscheibe verläuft. Die gekrümmte Kontur der Frontscheibe ist somit als Ganze aus der Orthogonalen zur Überwachungsebene verkippt. Die Frontscheibe steht an keinem Punkt senkrecht zu dem Sendestrahl, so dass der Frontscheibenreflex stets aus dem Strahlengang nach oben oder unten weggespiegelt wird. Alternativ zu einer Definition über Sekanten kann man es auch so ausdrücken, dass der größtmögliche in die gekrümmte Frontscheibe eingeschriebene Körper ohne Krümmung in Höhenrichtung ein Kegelstumpf mit schrägen Wänden und kein Kreiszylinder mit senkrechten Wänden ist.

Die Frontscheibe weist bevorzugt die Form eines Hohlspiegels auf, so dass Reflexionen des ausgesandten Lichtstrahls an der Frontscheibe unabhängig von der Höhenlage gegenüber der Überwachungsebene in einen gemeinsamen Fokus abgelenkt werden. Die Krümmung des Hohlspiegels wirkt in erster Linie in Höhenrichtung fokussierend. Es entsteht deshalb nur bei einer festen Winkelstellung der Ablenkeinheit ein echter Fokuspunkt, an dem sich die Frontscheibenreflexe unabhängig von der Auftreffhöhe treffen. Über die unterschiedlichen Winkelstellungen wird daraus ein Ring von Fokuspunkten, beziehungsweise es gibt eine gemeinsame Fokusebene parallel zur Überwachungsebene. Zusätzlich ist die Frontscheibe aber in der Regel auch in der Ebene parallel zu der Überwachungsebene gekrümmt, nämlich als Rotationskörper ausgebildet. Damit erfolgt auch in dieser Ebene eine gewisse Fokussierung. Der Fokus ist noch bevorzugter oberhalb oder unterhalb der Frontscheibe angeordnet. Damit werden Störungen des Empfangsstrahlengangs verhindert.

Die Frontscheibe weist bevorzugt in einem Schnitt senkrecht zu der Überwachungsebene einen Abschnitt einer Parabel, einer Hyperbel, einer Ellipse oder einer Asphäre auf. Dies sind besondere Ausprägungen der erfindungsgemäßen Krümmung mit den gewünschten Fokussierungseigenschaften. Räumlich entsteht daraus bei einer als Rotationskörper geformten Frontscheibe ein Ausschnitt eines Rotationsparaboloiden, -hyperboloiden oder -ellipsoiden. Der Ausschnitt kann dabei axial oder außeraxial sein, d. h. charakteristische Punkt wie Scheitelpunkte, Brennpunkte oder dergleichen einschließen oder nicht.

Die Frontscheibe weist bevorzugt eine Antireflexbeschichtung auf. Dadurch wird die Reflexivität verringert und somit der Frontscheibenreflex von Anfang an abgeschwächt.

Der Sensor weist bevorzugt eine optische Falle auf, um Reflexionen des ausgesandten Lichtstrahls an der Frontscheibe zumindest teilweise zu absorbieren. Die Krümmung der Frontscheibe führt dazu, dass es geeignete Anordnungen der optischen Falle gibt, an denen der Frontscheibenreflex aufgefangen werden kann. Das Licht zu absorbieren umfasst hier in einer sehr breiten Bedeutung einerseits die Umwandlung der optischen Energie in Wärme oder andere, von dem Lichtempfänger nicht erfassbare Energie, andererseits aber auch die schlichte Ablenkung in eine unkritische Richtung. Wichtig ist die Wirkung der optischen Falle, dass Streulicht aus dem Frontscheibenreflex den Lichtempfänger in möglichst geringem Maße erreicht.

Die optische Falle ist bevorzugt als Rotationskörper ausgebildet. Dieser Rotationskörper erstreckt sich vorzugsweise über denselben Winkelbereich wie die Frontscheibe. Damit wirkt die optische Falle überall in Umfangsrichtung der Frontscheibe über den gesamten Sichtbereich des Sensors. Besonders bevorzugt ist eine Anordnung konzentrisch zu der Frontscheibe und in deren Fokus. Damit genügt eine geringe Ausdehnung der optischen Falle, um die Frontscheibenreflexe unabhängig von der Höhenlage und Winkellage des Sendestrahls aufzufangen.

Die optische Falle ist bevorzugt als Blende mit einer Öffnung in dem Fokus der Frontscheibe und mit einem Hohlraum ausgebildet. Die Falle fängt damit ganz gezielt mit ihrer Blende das Licht des Frontscheibenreflexes dort ein, wohin die erfindungsgemäß gekrümmte Frontscheibe es ablenkt. Vorzugsweise weist die optische Falle innen ein lichtschluckendes und/oder lichtverteilendes Material auf. Damit kann das Licht die optische Falle nicht mehr oder nur noch zu einem geringen Teil verlassen. Als Material eignet sich beispielsweise ein schwarzer Anstrich, schwarzer Samt oder eloxiertes Aluminium.

Lichtsender und Lichtempfänger sind bevorzugt nicht koaxial zueinander angeordnet. Vorzugsweise fällt damit die optische Achse des Lichtsenders nicht mit der Drehachse der Ablenkeinheit zusammen. Bei koaxialer Anordnung von Lichtsender und Lichtempfänger wirkt bereits eine herkömmliche, kegelstumpfförmige Frontscheibe, um den Frontscheibenreflex wegzuspiegeln. Denn die koaxiale Anordnung sorgt dafür, dass der Sendestrahl stets auf gleicher Höhe, also in derselben Ebene senkrecht zur Drehachse der Ablenkeinheit ausgesandt wird. Bei nicht koaxialer Anordnung entsteht eine Auf- und Abbewegung des Sendestrahls, weil der Sendestrahl nicht zentral auf die Ablenkeinheit fällt und somit in Abhängigkeit von der Winkelstellung ein Höhenversatz entsteht. Wegen der Krümmung der Frontscheibe wird dennoch der Frontscheibenreflex zuverlässig und in definierter Richtung weggespiegelt, so dass er beispielsweise in einer optischen Falle absorbiert werden kann. Die nicht koaxiale Anordnung ist zugleich besonders vorteilhaft, weil sie eine kompakte Bauform des Sensors ermöglicht, die vor allem eine bauhöhenoptimierte Sende- und Empfangseinheit erlaubt. Zugleich wird das Einstellen oder Justieren der Signaldynamik erleichtert, vor allem im Nahbereich, während einfache optische Bauelemente verwendet werden können.

Vorzugsweise ist eine Kanaltrennung zwischen Lichtsender und Lichtempfänger vorgesehen. Dazu sind noch bevorzugter eine Sendeoptik und eine Empfangsoptik nicht koaxial nebeneinander mit einem lichtundurchlässige Trennelement dazwischen angeordnet. Die Kanaltrennung verringert oder verhindert ein optisches Übersprechen.

Der Sensor ist bevorzugt als entfernungsmessender Laserscanner ausgebildet, indem in der Auswertungseinheit die Lichtlaufzeit zwischen Aussenden und Empfang des Lichtstrahls und daraus die Entfernung eines Objekts bestimmbar ist, wobei eine Winkelmesseinheit vorgesehen ist, mittels derer die Winkelstellung der Ablenkeinheit erfassbar ist, so dass für erfasste Objekte in der Überwachungsebene zweidimensionale Positionskoordinaten zur Verfügung stehen. Damit wird eine vollständige Positionserfassung innerhalb der Überwachungsebene möglich. Zusätzlich können bei Bedarf auch Objektkonturen vermessen werden.

Vorteilhafterweise ist der Sensor als Sicherheitsscanner mit einem Sicherheitsausgang ausgebildet, indem in der Auswertungseinheit bestimmbar ist, ob sich ein Objekt in einem Schutzfeld innerhalb der Überwachungsebene befindet, und daraufhin ein sicherheitsgerichtetes Abschaltsignal über den Sicherheitsausgang ausgebbar ist. In sicherheitstechnischer Anwendung ist das Ausschließen von Störungen durch die Frontscheibe besonders wichtig, weil Gesundheit und Leben von Personen von der zuverlässigen Funktionsfähigkeit abhängen.

Das erfindungsgemäße Verfahren kann auf ähnliche Weise weitergebildet werden und zeigt dabei ähnliche Vorteile. Derartige vorteilhafte Merkmale sind beispielhaft, aber nicht abschließend in den sich an die unabhängigen Ansprüche anschließenden Unteransprüchen beschrieben.

Die Erfindung wird nachstehend auch hinsichtlich weiterer Merkmale und Vorteile beispielhaft anhand von Ausführungsformen und unter Bezug auf die beigefügte Zeichnung näher erläutert. Die Abbildungen der Zeichnung zeigen in:
- Fig. 1: eine schematische Schnittdarstellung eines erfindungsgemäßen Laserscanners;
- Fig. 2: ein Schnitt durch eine Ausführungsform der Frontscheibe des Laserscanners gemäß Figur 1 senkrecht zu dessen Überwachungsebene;
- Fig. 3: eine dreidimensionale Ansicht einer Ausführungsform der Frontscheibe des Laserscanners gemäß Figur 1;
- Fig. 4: eine Schnittdarstellung der Frontscheibe gemäß Figur 3;
- Fig. 5: eine schematische Schnittdarstellung des Optikschemas einer weiteren Ausführungsform eines erfindungsgemäßen Laserscanners mit Kanaltrennung; und
- Fig. 6: eine schematische Schnittdarstellung des Optikschemas einer weiteren Ausführungsform eines erfindungsgemäßen Laserscanners mit einer optischen Falle.

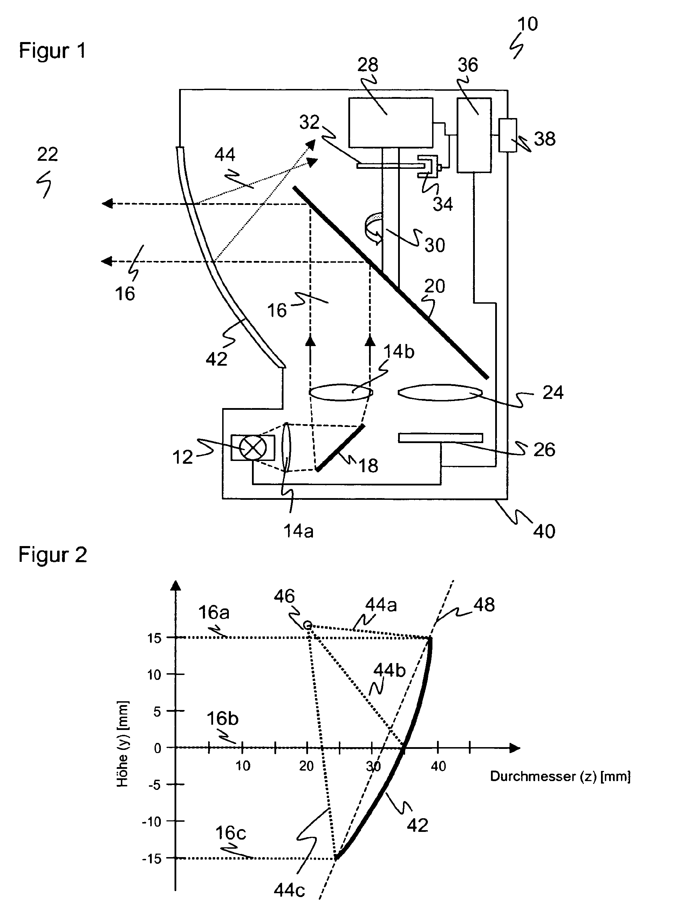

Fig. 1 zeigt eine schematische Schnittdarstellung durch einen erfindungsgemäßen optoelektronischen Sensor 10, der als Laserscanner ausgebildet ist. Ein Lichtsender 12, beispielsweise mit einer Laserlichtquelle, erzeugt mit Hilfe von Sendeoptiken 14a, 14b einen Sendelichtstrahl 16 mit einzelnen kurzen Lichtimpulsen. Alternativ arbeitet der Sensor 10 anstelle eines Pulsverfahrens mit dem einleitend beschriebenen Phasenverfahren. Der Sendelichtstrahl 16 wird mittels eines Umlenkspiegels 18 und einer Ablenkeinheit 20 in eine Überwachungsebene 22 ausgesandt. Anstelle eines Umlenkspiegels 18 kann auch ein Polarisationsteiler eingesetzt werden. Überhaupt kann die Einkopplung des Sendelichtstrahls 16 in den Sendelichtweg über die Ablenkeinheit 20 auf alternative, an sich bekannte Weise erfolgen, beispielsweise mit nur einer Sendeoptik oder mit direktem Lichtweg ohne Umlenkspiegel 18.

Der Sendelichtstrahl 16 wird in der Überwachungsebene 22 von dort gegebenenfalls vorhandenen Objekten remittiert und kehrt dann, je nach optischen Eigenschaften der Objektoberfläche abgeschwächt und/oder aufgestreut, zumindest teilweise als remittierter Lichtstrahl zu dem Sensor 10 zurück. Dort trifft der remittierte Lichtstrahl erneut auf die Ablenkeinheit 20 und wird durch eine Empfangsoptik 24 auf einen Lichtempfänger 26 geleitet, beispielsweise eine Photodiode. Wie schon für Lichtsender 12 und Sendeoptik 14a-b erläutert, ist auch die Ausprägung und Anordnung der Empfangsoptik 24 sowie die Lage des Lichtempfängers 26 rein beispielhaft zu verstehen. Es sind diverse alternative Ausgestaltungen möglich, etwa eine mit der Ablenkeinheit 20 mitbewegte Empfangsoptik, eine Empfangsoptik aus mehreren Linsen, eine Strahlformung des remittierten Lichtstrahls bereits vor Auftreffen auf die Ablenkeinheit 20 und dergleichen.

Die Ablenkeinheit 20 ist als Drehspiegel ausgestaltet, der durch Antrieb eines Motors 28 kontinuierlich rotiert. Dadurch überstreicht der Sendelichtstrahl 16 mit der Rotationsbewegung eine Überwachungsebene, die senkrecht zur Drehachse 30 steht. In einer alternativen Ausführungsform ist eine zusätzliche Verkippung der Drehachse 30 denkbar, um einen dreidimensionalen Raumabschnitt als Überwachungsbereich 22 zu erfassen. Als Überwachungsebene wird in diesem Fall die Mittenebene des Raumabschnitts bezeichnet.

Die Anordnung von Lichtsender 12 und Lichtempfänger 26 ist in dieser Ausführungsform nicht koaxial. Dadurch fällt der Sendelichtstrahl 16 nicht zentral, sondern im Verlauf der Drehbewegung in unterschiedlichen Höhen auf die Ablenkeinheit 20. Dies führt zu einer Auf- und Abbewegung des Sendelichtstrahls 16, deren Ausmaß vom Abstand der optischen Achse des Lichtsender 12 zu der Drehachse 30 abhängt. In einer alternativen Ausführungsform sind Lichtsender 12 und Lichtempfänger 26 koaxial angeordnet, beispielsweise mit Hilfe eines Strahlteilers, und die Auf- und Abbewegung des Sendelichtstrahls 16 entfällt.

Mit dem Sensor 10 kann ein Sichtwinkel von bis zu 270° überwacht werden. Zusätzlich zu den dargestellten Elementen kann in einem rückwärtigen Bereich ein Referenzziel vorgesehen sein, um die Funktion des Lichtsenders 12 zu testen. Dies ist eine beispielhafte Möglichkeit, um eine der Anforderungen der einleitend genannten Sicherheitsnormen zu erfüllen, mit denen der Sensor 10 ein sicherer Sensor wird. Prinzipiell erlaubt der dargestellte Optikaufbau auch einen größeren Sichtwinkel von bis zu 360°.

Die jeweilige Winkelstellung der Ablenkeinheit 20 wird über einen Encoder erfasst, der beispielsweise eine Codescheibe 32 und eine Gabellichtschranke 34 umfasst. Alternative Messverfahren für eine Winkelstellung sind möglich. Der von dem Lichtsender 12 erzeugte Sendelichtstrahl 16 überstreicht somit die durch die Rotationsbewegung erzeugte Überwachungsebene 22. Wird ein von dem Lichtempfänger 26 empfangener remittierter Lichtstrahl aus der Überwachungsebene 22 empfangen, so kann aus der Winkelstellung der Ablenkeinheit 20 mittels des Encoders 32, 34 auf die Winkellage des Objektes in der Überwachungsebene 22 geschlossen werden.

Zusätzlich wird die Laufzeit der einzelnen Laserlichtpulse von ihrem Aussenden bis zu dem Empfang nach Reflexion an dem Objekt in der Überwachungsebene 22 ermittelt. Aus der Lichtlaufzeit wird unter Verwendung der Lichtgeschwindigkeit auf die Entfernung des Objektes von dem Sensor 10 geschlossen. Diese Auswertung erfolgt in einer Auswerteeinheit 36, die dafür mit dem Lichtsender 12, dem Lichtempfänger 26, dem Motor 28 und dem Encoder 32, 34 verbunden ist. Somit stehen über den Winkel und die Entfernung zweidimensionale Polarkoordinaten aller Objekte in der Überwachungsebene 22 zur Verfügung.

Speziell in sicherheitstechnischen Anwendungen ist Ziel der Auswertung, ein Sicherheitssignal an einem Sicherheitsausgang 38 (OSSD, Output Signal Switching Device) bereitzustellen, beispielsweise um einen Nothalt einer angeschlossenen Maschine auszulösen. In dieser Anwendung werden vorzugsweise auch die einleitend genannten Maßnahmen eingehalten, um die einschlägigen Sicherheitsnormen zu erfüllen. Über die Winkel- und Entfernungsdaten berechnet die Auswerteeinheit 36 den Ort eines Objektes in der Überwachungsebene 22. Dies wird mit einem zweidimensionalen Schutzfeld verglichen, dessen Geometrie durch entsprechende Parameter in einem Speicher der Auswertungseinheit 36 abgelegt ist. Damit erkennt die Auswertungseinheit 36, ob das Schutzfeld verletzt ist, also ob sich ein unzulässiges Objekt darin befindet und schaltet je nach Ergebnis den Sicherheitsausgang 38. Je nach Ausführungsform ist denkbar, die Auswertung oder Teile der Auswertung statt in einer internen Auswertungseinheit 36 in einer übergeordneten Steuerung vorzunehmen.

Alle genannten Funktionskomponenten sind in einem Gehäuse 40 angeordnet, das frontseitig, also im Bereich des Lichtaus- und Lichteintritts, eine Frontscheibe 42 aufweist. Erfindungsgemäß ist vorgesehen, die Frontscheibe 42 mit einer Krümmung zu versehen. Denn durch den zweifachen Grenzflächenübergang bei Auftreffen und bei Verlassen der Frontscheibe 42 entsteht ein Frontscheibenreflex 44 des Sendelichtstrahls 16. Der Frontscheibenreflex 44 soll nicht in den Lichtempfänger 26 gelangen, da er dort als Streulicht das Empfangssignal stört. Eine optionale Zusatzmöglichkeit, um diesen Effekt zu reduzieren, ist eine Antireflexbeschichtung.

Figur 2 zeigt einen Schnitt der Frontscheibe 42 in einer Richtung senkrecht zu der Überwachungsebene 22. Dabei ist auf der X-Achse der Durchmesser der Frontscheibe 42 und auf der Y-Achse deren Höhe aufgetragen. Die Frontscheibe 42 ist eine Freiformfläche, deren Kontur sich in dem dargestellten Schnitt in praktisch jede gewünschten Genauigkeit durch einen Polynom- oder Asphärenfit annähern lässt. Durch die besondere Krümmung wird erreicht, dass Sendelichtstrahlen 16a-c unabhängig von ihrer Höhenlage Frontscheibenreflexe 44a-c erzeugen, die sich in einem gemeinsamen Fokus 46 treffen. Vorzugsweise ist die Lage des Fokus' 46 so weit oben beziehungsweise in gespiegelter Anordnung unten gewählt, dass kein Frontscheibenreflex 44a-c auf die Ablenkeinheit 20 zurückgeworfen wird. Die wird dadurch erreicht, dass sich die Kontur der Frontscheibe 42 insgesamt nach außen oder innen neigt. Jede Sekante 48 der Kontur ist also gegenüber einer Vertikalen verkippt.

Die Frontscheibe 42 ist vorzugsweise über ihre gesamte Höhe gekrümmt, wobei die Krümmung monoton zu- oder abnimmt. Dadurch nimmt die jeweilige Verkippung des betroffenen infinitesimalen Frontscheibenstücks entsprechend zu oder ab, so dass mit zunehmendem Abstand zu einem unteren oder oberen Höhenniveau eine stärkere Ablenkung erfolgt. Dazu eignen sich verschiedene Konturen, beispielsweise parabolische, hyperbolische, elliptische oder allgemeine asphärische Verläufe. Die Krümmung sollte im Ergebnis dazu dienen, den Frontscheibenreflex 44 unabhängig von der Auftreffhöhe des Sendelichtstrahls 16 wegzuspiegeln und dabei nach Möglichkeit auch zu fokussieren.

Die Darstellung der Figuren 1 und 2 zeigen jeweils einen Schnitt senkrecht zu der Überwachungsebene 22 bei einer festen Winkelstellung der Ablenkeinheit 20. Um das definierte Wegspiegeln des Frontscheibenreflexes 44 auch in unterschiedlichen Winkelstellungen zu erreichen, wird die Frontscheibe 42 vorzugsweise als Rotationskörper ausgebildet, welche die erforderliche Krümmung in jeder Winkelstellung aufweist, also in jedem senkrechten Schnitt zu der Überwachungsebene 22 durch die Drehachse 30.

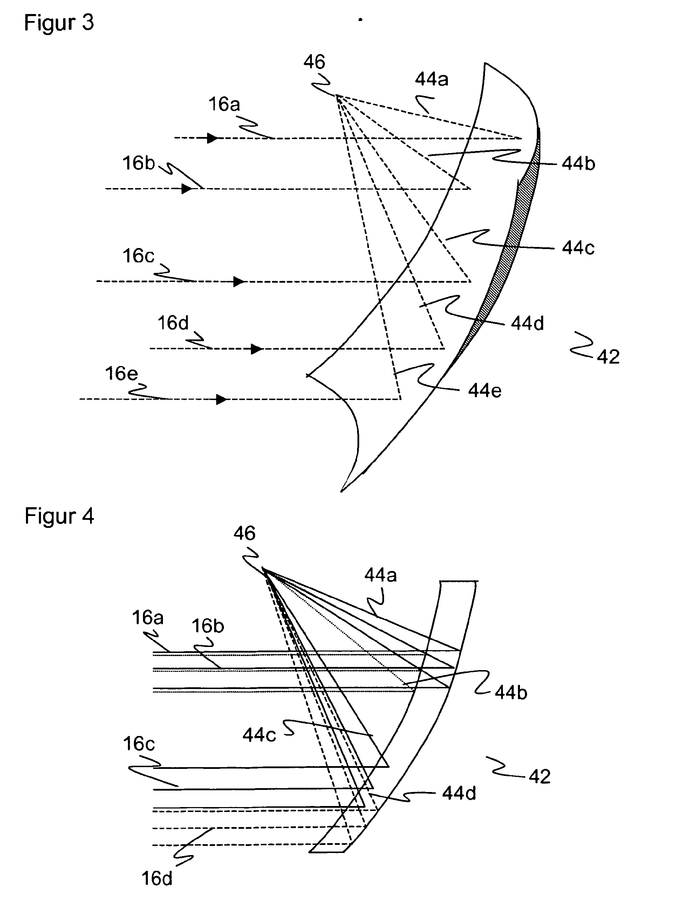

Figur 3 zeigt einen dreidimensionalen Ausschnitt einer solchen als Rotationskörper ausgebildeten Frontscheibe 42, die Mittenstrahlen einiger Sendelichtstrahlen 16a-e in unterschiedlicher Auftreffhöhe und mit unterschiedlichem lateralem Versatz sowie zugehörige Frontscheibenreflexe 44a-e. Dabei bewirkt die zusätzliche Krümmung parallel zu der Überwachungsebene 22, die durch den Rotationskörper entsteht, auch eine gewisse Fokussierung in dieser Richtung, so dass sich sämtliche Frontscheibenreflexe des dargestellten Ausschnitts in einem Fokuspunkt 46 oder zumindest in einem eng begrenzten Fokusbereich treffen. Bei zusätzlichen Winkelstellungen, demnach einem größeren Winkelausschnitt als dem dargestellten, wird aus dem Fokuspunkt 46 ein umlaufender ringförmiger Fokusbereich in derselben Höhenebene. Insgesamt wird die Frontscheibe 42 als dreidimensionaler Körper kelchförmig.

Figur 4 zeigt einen zu Figur 3 gehörigen Schnitt der Frontscheibe 42 mit einigen Sendelichtbündeln 16a-d in unterschiedlicher Auftreffhöhe und deren Frontscheibenreflexen 44a-d. Dabei ist jedes Lichtbündel 16, 44 jeweils mit den äußeren und einem mittleren Strahl und zur besseren Unterscheidbarkeit in eigener Strichlierung dargestellt.

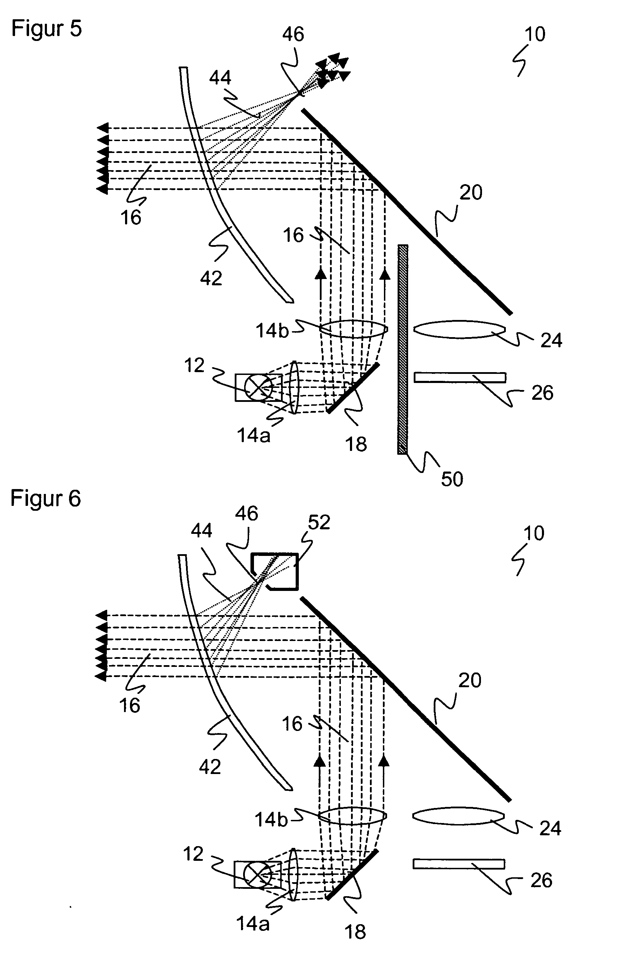

Figur 5 zeigt eine schematische Schnittdarstellung des Optikschemas einer weiteren Ausführungsform der Erfindung. Dabei bezeichnen wie in der gesamten Beschreibung gleiche Bezugszeichen die gleichen oder einander entsprechenden Merkmale. Der Sendelichtstrahl 16 wird hier als Sendelichtbündel mit mehreren Teilstrahlen dargestellt, um noch einmal die Ablenkung an der gekrümmten Frontscheibe 42 in einen gemeinsamen Fokus 46 zu illustrieren. Im Unterschied zu der Ausführungsform der Figur 1 ist eine Kanaltrennung zwischen Sende- und Empfangskanal vorgesehen, indem ein Trennsteg 50 zwischen der Sendeoptik 14b und der Empfangsoptik 26 angeordnet wird. Dadurch wird ein optisches Übersprechen verhindert oder zumindest reduziert. Unter optischem Übersprechen werden Reflexe und vom Sendepfad gestreutes Licht verstanden, welches intern statt nach Antasten eines Objekts in den Empfangspfad eindringt und somit den Messvorgang stört.

Figur 6 zeigt eine schematische Schnittdarstellung ähnlich Figur 5 einer weiteren Ausführungsform der Erfindung. Eine optische Falle 52 wird so angeordnet, dass das von der gekrümmten Frontscheibe 42 in den Fokus 46 gelenkte Licht aufgefangen wird, um den Frontscheibenreflex 44 auszublenden. Die optische Falle 52 ist hier nur im Schnitt gezeigt und real vorzugsweise als umlaufender Rotationskörper ausgebildet. Der auf eine Ebene, in Figur 6 in einem Fokuspunkt 46 zusammenlaufende fokussierte Frontscheibenreflex 44 wird durch eine Blende in den Innenraum der optischen Falle 52 geführt und verläuft sich dort. Um dies zu unterstützen, kann die optische Falle 52 mit einem absorbierenden Material, etwa schwarzen Samt oder eloxiertem Aluminium, ausgestattet sein.

Obwohl die Erfindung anhand von einzelnen Ausführungsformen unter Bezugnahme auf zugehörige Figuren beschrieben ist, umfasst die Erfindung auch Mischformen. Beispielweise kann die Kanaltrennung 50 gemäß Figur 5 mit einer optischen Falle 52 gemäß Figur 6 kombiniert werden, und der Sensor 10 gemäß Figur 1 kann sowohl mit jeder alternativen erfindungsgemäßen Ausprägung der gekrümmten Frontscheibe 42 als auch mit den zusätzlichen Elementen der Figuren 5 und 6, wie Kanaltrennung 50 oder optischer Falle 52, ausgerüstet werden.

## Patentansprüche

1. Optoelektronischer Sensor (10), insbesondere Laserscanner, mit einem Lichtsender (12) zum Aussenden eines Lichtstrahls (16) in eine Abtastebene (22), einem Lichtempfänger (26) zum Erzeugen eines Empfangssignals aus dem von Objekten in der Abtastebene (22) remittierten Lichtstrahl, einer bewegliche Ablenkeinheit (20) zur periodischen Ablenkung des ausgesandten Lichtstrahls (16), um im Verlauf der Bewegung die Abtastebene (22) abzutasten, einer Auswertungseinheit (36), die dafür ausgebildet ist, aus dem Empfangssignal Informationen über Objekte in der Abtastebene (22) zu gewinnen sowie mit einer Frontscheibe (42) in dem Lichtweg des ausgesandten Lichtstrahls (16), wobei die Frontscheibe (42) einen Rotationskörper bezüglich einer zentralen Achse (30) senkrecht zu der Abtastebene (22) bildet und als Freiformfläche ausgebildet ist, die in jedem Schnitt senkrecht zu der Abtastebene (22) und durch die zentrale Achse (30) eine gekrümmte Kontur aufweist,
**dadurch gekennzeichnet,**
**dass** eine Sekante der Kontur, welche durch die obere und untere Kante der Frontscheibe (42) verläuft, gegenüber der zentralen Achse (30) verkippt ist und sich somit die Kontur insgesamt nach innen oder außen neigt, und dass die Frontscheibe (42) die Form eines Hohlspiegels aufweist, so dass Reflexionen (44) des ausgesandten Lichtstrahls (16) an der Frontscheibe (42) unabhängig von der Höhenlage gegenüber der Abtastebene (22) in einen gemeinsamen Fokus (46) abgelenkt werden, der oberhalb oder unterhalb der Frontscheibe (42) angeordnet ist, um Störungen des Empfangsstrahlengangs zu verhindern.

2. Sensor (10) nach Anspruch 1,
wobei die zentrale Achse (30) eine Drehachse der Ablenkeinheit (20) ist.

3. Sensor (10) nach Anspruch 1 oder 2,
wobei die Richtung senkrecht zu der Abtastebene (22) eine Höhenrichtung ist, und wobei die Krümmung der Frontscheibe (42) mit der Höhe monoton zunimmt oder monoton abnimmt.

4. Sensor (10) nach einem der vorhergehenden Ansprüche,
wobei die Frontscheibe (42) in einem Schnitt senkrecht zu der Abtastebene (22) einen Abschnitt einer Parabel, einer Hyperbel, einer Ellipse oder einer Asphäre aufweist.

5. Sensor (10) nach einem der vorhergehenden Ansprüche,
wobei die Frontscheibe (42) eine Antireflexbeschichtung aufweist.

6. Sensor (10) nach einem der vorhergehenden Ansprüche,
der eine optische Falle (52) aufweist, um Reflexionen (44) des ausgesandten Lichtstrahls (16) an der Frontscheibe (42) zumindest teilweise zu absorbieren.

7. Sensor (10) nach Anspruch 6,
wobei die optische Falle (52) als Rotationskörper ausgebildet ist, insbesondere konzentrisch zu der als Rotationskörper ausgebildeten Frontscheibe (42) und in deren Fokus (46).

8. Sensor (10) nach Anspruch 6 oder 7,
wobei die optische Falle (52) als Blende mit einer Öffnung in dem Fokus (46) der Frontscheibe (42) und mit einem Hohlraum ausgebildet ist, der insbesondere innen ein lichtschluckendes und/oder lichtverteilendes Material aufweist.

9. Sensor (10) nach einem der vorhergehenden Ansprüche,
der als entfernungsmessender Laserscanner ausgebildet ist, indem in der Auswertungseinheit (36) die Lichtlaufzeit zwischen Aussenden und Empfang des Lichtstrahls (16) und daraus die Entfernung eines Objekts bestimmbar ist, wobei eine Winkelmesseinheit (32, 34) vorgesehen ist, mittels derer die Winkelstellung der Ablenkeinheit (20) erfassbar ist, so dass für erfasste Objekte in der Abtastebene (22) zweidimensionale Positionskoordinaten zur Verfügung stehen.

10. Sensor (10) nach einem der vorhergehenden Ansprüche,
der als Sicherheitsscanner mit einem Sicherheitsausgang (38) ausgebildet ist, indem in der Auswertungseinheit (36) bestimmbar ist, ob sich ein Objekt in einem Schutzfeld innerhalb der Abtastebene (22) befindet, und daraufhin ein sicherheitsgerichtetes Abschaltsignal über den Sicherheitsausgang (38) ausgebbar ist.

11. Verfahren zur Erkennung von Objekten in einer Abtastebene (22), wobei ein Lichtstrahl (16) in die Abtastebene (22) ausgesandt und ein Empfangssignal aus dem von Objekten in der Abtastebene (22) remittierten Lichtstrahl erzeugt wird, wobei aus dem Empfangssignal Informationen über Objekte in der Abtastebene (22) gewonnen werden, wobei der ausgesandte Lichtstrahl (16) mit Hilfe einer beweglichen Ablenkeinheit (20) periodisch abgelenkt wird, um im Verlauf der Bewegung die Abtastebene (22) abzutasten, und wobei eine als Rotationskörper bezüglich einer zentralen Achse (30) senkrecht zu der Abtastebene (22) ausgebildete Frontscheibe (42) mit einer gekrümmten Kontur in jedem Schnitt senkrecht zu der Abtastebene (22) und durch die zentrale Achse (30) einen Teil des ausgesandten Lichtstrahls (16) als Frontscheibenreflex (44) reflektiert,
**dadurch gekennzeichnet,**
**dass** der Frontscheibenreflex (44) aufgrund der gekrümmten Kontur der in der Form eines Hohlspiegels ausgebildeten Frontscheibe (42), die sich nach innen oder außen neigt, indem eine Sekante der Kontur, welche durch die obere und untere Kante der Frontscheibe (42) verläuft, gegenüber der zentralen Achse (30) verkippt ist, unabhängig von einer Höhenlage des ausgesandten Lichtstrahls (16) gegenüber der Abtastebene (22) in einen gemeinsamen Fokus (46) gelenkt wird, der oberhalb oder unterhalb der Frontscheibe (42) angeordnet ist, um Störungen des Empfangsstrahlengangs zu verhindern.

## Claims

1. An optoelectronic sensor (10), in particular a laser scanner, having a light transmitter (12) for transmitting a light beam (16) into a scanning plane (22), a light receiver (26) for generating a reception signal from the light beam remitted from objects in the scanning plane (22), a movable deflection unit (20) for periodically deflecting the transmitted light beam (16) to scan the scanning plane (22) in the course of the movement, an evaluation unit (36) configured to obtain information about objects in the scanning plane (22) from the reception signal as well as a front screen (42) in the light path of the transmitted light beam (16), wherein the front screen (42) forms a body of rotation with reference to a central axis (30) perpendicular to the scanning plane (22) and is designed as a free-form surface which comprises a curved contour in each section perpendicular to the scanning plane (22) and through the central axis (30),
**characterized in that**
a secant of the contour passing through the upper and lower edge of the front screen (42) is tilted with respect to the central axis (30) and thus the contour as a whole is tilted inward or outward, and **in that** the front screen (42) comprises the shape of a concave mirror so that reflections (44) of the transmitted light beam (16) at the front screen (42) are deflected into a common focus (46) irrespective of the height position relative to the scanning plane (22), the focus (46) being disposed above or below the front screen (42), to prevent interference of the reception beam path.

2. The sensor (10) according to claim 1,
wherein the central axis (30) is an axis of rotation of the deflection unit (20).

3. The sensor (10) according to claim 1 or 2,
wherein the direction perpendicular to the scanning plane (22) is a height direction, and wherein the curvature of the front screen (42) monotonically increases or monotonically decreases with the height.

4. The sensor (10) according to one of the preceding claims,
wherein the front screen (42) comprises part of a parabola, a hyperbola, an ellipse, or an aspherical surface in a section perpendicular to the scanning plane (22).

5. The sensor (10) according to one of the preceding claims,
wherein the front screen (42) comprises an antireflective coating.

6. The sensor (10) according to one of the preceding claims,
comprising an optical trap (52) to at least partially absorb reflections (44) of the transmitted light beam (16) at the front screen (42).

7. The sensor (10) according to claim 6,
wherein the optical trap (52) is formed as a body of rotation, in particular concentrically to the front screen (42) being formed as a body of rotation and in its focus (46).

8. The sensor (10) according to claim 6 or 7,
wherein the optical trap (52) is configured as an aperture with an opening in the focus (46) of the front screen (42) and in a cavity which, in particular on the inside, comprises a light absorbing and/or light distributing material.

9. The sensor (10) according to one of the preceding claims,
the sensor (10) being configured as a distance measuring laser scanner in that the light time of flight between transmission and reception of the light beam (16) and, from that, the distance of an object can be determined in the evaluation unit (36), wherein an angle encoder (32, 34) is provided for detecting the angular position of the deflection unit (20), so that two-dimensional position coordinates of objects detected in the scanning plane (22) are available.

10. The sensor (10) according to one of the preceding claims,
the sensor (10) being configured as a safety scanner with a safety output (38), wherein the evaluation unit (36) can determine whether an object is located in a protected field within the scanning plane (22) and thereupon output a safety related shutdown signal via the safety output (38).

11. A method for the detection of objects in a scanning plane (22), wherein a light beam (16) is transmitted into the scanning plane (22) and a reception signal is generated from the light beam remitted from objects in the scanning plane (22), wherein information about objects in the scanning plane (22) is obtained from the reception signal, wherein the transmitted light beam (16) is periodically deflected by means of a movable deflection unit (20) to scan the scanning plane (22) in the course of the movement, and wherein a front screen (42) formed as a body of rotation with reference to a central axis (30) perpendicular to the scanning plane (22) having a curved contour in each section perpendicular to the scanning plane (22) and through the central axis (30) reflects a portion of the transmitted light beam (16) as a front screen reflex (44),
**characterized in that**
the front screen reflex (44) is directed into a common focus (46) irrespective of a height position of the transmitted light beam (16) relative to the scanning plane (22) due to the curved contour of the front screen (42) being designed in the shape of a concave mirror and being tilted inward or outward by a secant of the contour passing through the upper and lower edge of the front screen (42) being tilted with respect to the central axis (30), the focus (46) being disposed above or below the front screen (42), to prevent interference of the reception beam path.

## Revendications

1. Capteur optoélectronique (10), en particulier scanner à laser, comprenant un émetteur de lumière (12) pour émettre un rayon de lumière (16) dans un plan de palpage (22), un récepteur de lumière (26) pour générer un signal reçu à partir du rayon de lumière réémise par des objets dans le plan de palpage (22), une unité de déflexion mobile (20) pour défléchir périodiquement le rayon de lumière émise (16) afin de palper le plan de palpage (22) dans le déroulement du mouvement, une unité d'évaluation (36) qui est réalisée pour récupérer à partir du signal reçu des informations sur des objets dans le plan de palpage (22), et comprenant une plaque frontale (42) dans le trajet lumineux du rayon de lumière émise (16), ladite plaque frontale (42) formant un corps de révolution par rapport à un axe central (30) perpendiculaire au plan de palpage (22) et étant réalisée comme une surface à forme libre qui présente un contour incurvé dans chaque coupe perpendiculaire au plan de palpage (22) et traversant l'axe central (30),
**caractérisé en ce que**
une sécante du contour, qui passe par l'arête supérieure et l'arête inférieure de la plaque frontale (44), est basculée par rapport à l'axe central (30) et ainsi le contour est incliné dans son ensemble vers l'intérieur ou vers l'extérieur, et **en ce que** la plaque frontale (42) présente la forme d'un miroir creux, de sorte que des réflexions (44) du rayon de lumière émise (16) au niveau de la plaque frontale (42) sont défléchies, indépendamment de la situation en hauteur par rapport au plan de palpage (22), vers un foyer commun (46) qui est agencé au-dessus ou au-dessous de la plaque frontale (42), afin d'empêcher des perturbations du trajet des rayons reçus.

2. Capteur (10) selon la revendication 1,
dans lequel l'axe central (30) est un axe de rotation de l'unité de déflexion (20).

3. Capteur (10) selon la revendication 1 ou 2,
dans lequel la direction perpendiculaire au plan de palpage (22) est une direction en hauteur, et dans lequel la courbure de la plaque frontale (42) augmente de façon monotone ou diminue de façon monotone avec la hauteur.

4. Capteur (10) selon l'une des revendications précédentes,
dans lequel la plaque frontale (42) présente, dans une coupe perpendiculaire au plan de palpage (22), un tronçon d'une parabole, d'une hyperbole, d'une ellipse ou d'une ligne asphérique.

5. Capteur (10) selon l'une des revendications précédentes,
dans lequel la plaque frontale (42) comporte un revêtement antireflets.

6. Capteur (10) selon l'une des revendications précédentes,
qui comporte un piège optique (52) afin d'absorber au moins partiellement des réflexions (44) du rayon de lumière émise (16) au niveau de la plaque frontale (42).

7. Capteur (10) selon la revendication 6,
dans lequel le piège optique (52) est réalisé sous forme de corps de révolution, en particulier concentrique à la plaque frontale (42) réalisée sous forme de corps de révolution, et dans son foyer (46).

8. Capteur (10) selon la revendication 6 ou 7,
dans lequel le piège optique (52) est réalisé comme un diaphragme avec une ouverture au foyer (46) de la plaque frontale (42) et avec une cavité, qui comprend en particulier à l'intérieur un matériau absorbant la lumière et/ou diffusant la lumière.

9. Capteur (10) selon l'une des revendications précédentes,
qui est réalisé sous forme de scanner à laser mesurant des distances, dans lequel le temps de parcours de la lumière entre l'émission et la réception du rayon de lumière (16) et à partir de celui-ci l'éloignement d'un objet peuvent être déterminés dans l'unité d'évaluation (36), et dans lequel il est prévu une unité de mesure angulaire (32, 34) au moyen de laquelle la position angulaire de l'unité de déflexion (20) peut être déterminée, de sorte que l'on dispose de coordonnées de position bidimensionnelles pour des objets détectés dans le plan de palpage (22).

10. Capteur (10) selon l'une des revendications précédentes,
qui est réalisé sous forme de scanner de sécurité avec une sortie de sécurité (38), dans lequel il est possible de déterminer dans l'unité d'évaluation (36) si un objet se trouve dans un champ protégé à l'intérieur du plan de palpage (22), et suite à cela un signal de coupure à vocation de sécurité peut être émis via la sortie de sécurité (38).

11. Procédé pour reconnaître des objets dans un plan de palpage (22), dans lequel un rayon de lumière (16) est émis dans le plan de palpage (22), et un signal reçu est généré à partir du rayon de lumière réémise par des objets dans le plan de palpage (22), dans lequel des informations sur des objets dans le plan de palpage (22) sont récupérées à partir du signal reçu, dans lequel le rayon de lumière émise (16) est périodiquement défléchi à l'aide d'une unité de déflexion mobile (20), afin de palper le plan de palpage (22) dans le déroulement du mouvement, et dans lequel une plaque frontale (42), réalisée sous forme de corps de révolution par rapport à un axe central (30) perpendiculaire au plan de palpage (22), avec un contour incurvé dans chaque coupe perpendiculaire au plan de palpage (22) passant par l'axe central (30), réfléchit une partie du rayon de lumière émise (16) sous forme de réflexion sur la plaque frontale (44),
**caractérisé en ce que** la réflexion sur la plaque frontale (44) est défléchie vers un foyer commun (46), en raison du contour incurvé de la plaque frontale (42), réalisée sous la forme d'un miroir creux qui est incliné vers l'intérieur ou vers l'extérieur, du fait qu'une sécante du contour, qui passe par l'arête supérieure et par l'arête inférieure de la plaque frontale (42), est inclinée par rapport à l'axe central (30), indépendamment d'une situation en hauteur du rayon de lumière émise (16) par rapport au plan de palpage (22), foyer qui est agencé au-dessus ou au-dessous de la plaque frontale (42), afin d'empêcher des perturbations dans le trajet du rayon reçu.
